Europäisches Patentamt

European Patent Office

Office européen des brevets

(11) Veröffentlichungsnummer: **0 568 851 A2**

# EUROPÄISCHE PATENTANMELDUNG

(21) Anmeldenummer: **93106273.1**

(51) Int. Cl.5: **G02B 6/42**

(22) Anmeldetag: **17.04.93**

(30) Priorität: **04.05.92 DE 4214791**

(43) Veröffentlichungstag der Anmeldung:
**10.11.93 Patentblatt 93/45**

(84) Benannte Vertragsstaaten:
**DK ES FR GB GR IT NL SE**

(71) Anmelder: **ANT Nachrichtentechnik GmbH**
**Gerberstrasse 33**

**D-71522 Backnang(DE)**

(72) Erfinder: **Kuke, Albrecht, Dr. rer. nat.**
**Nelkenweg 2**
**W-7159 Auenwald(DE)**
Erfinder: **Hauer, Heiner, Dipl.-Ing.**
**Frühlingshalde 1**
**W-7012 Fellbach(DE)**

(54) **Optische Sende- und Empfangsanordnung.**

(57) Es soll eine optische Sende- und Empfangsanordnung angegeben werden, die es erlaubt, von einem Licht aussendenden Bauelement aus ein optisches Signal in eine Vielzahl von Lichtwellenleitern einzukoppeln und andererseits das durch die Lichtwellenleiter empfangene Licht auf ein jeweils zugehöriges Licht empfangendes Bauelement zu richten.

Es wird eine optische Sende- und Empfangsanordnung mit mehreren Lichtwellenleitern (31-34) beschrieben, in die jeweils Licht eingekoppelt wird und aus denen jeweils Licht von jeweils einem Licht empfangenden optischen elektrischen Bauelement (81-84) empfangen wird. Zwischen dem Lichtwellenleiter (31-34) und dem Licht empfangenden Bauelement(81-84) ist jeweils ein Strahlteiler (ST1-ST4) angeordnet. Der durch den Strahlteiler (ST1-ST4) transmittierte Anteil des Lichts aus dem Lichtwellenleiter (31-34) trifft auf das Licht empfangende Bauelement (81-84). Es ist ein gemeinsames Licht aussendendes optoelektrisches Bauelement (3) vorgesehen, das mit jedem Lichtwellenleiter (31-34) verbunden ist, indem der an dem zu dem jeweiligen Lichtwellenleiter zugehörigen Strahlteiler (ST1-ST4) reflektierte Anteil in die jeweiligen Lichtwellenleiter eingekoppelt wird und der transmittierte Anteil auf den nächsten Strahlteiler (ST1-ST4) trifft.

Anwendung der Anordnung in Lichtwellenleiterübertragungssystemen.

Fig.

Rank Xerox (UK) Business Services
(3.10/3.6/3.3.1)

Die Erfindung betrifft eine optische Sende- und Empfangsanordnung mit einem Licht aussendenden und einem Licht empfangenden optoelektrischen Bauelement und mit einem Lichtwellenleiter, in den Licht eingekoppelt bzw. aus dem Licht empfangen wird, wobei zwischen den optoelektrischen Bauelementen und dem Lichtwellenleiter ein Strahlteiler angeordnet ist.

Für Lichtwellenleiterübertragungssysteme werden als Sende- und/oder Empfangseinheit optische Sende- und Empfangsanordnungen eingesetzt. Ein Sende- und Empfangsmodul für eine bidirektionale optische Nachrichten- und Signalübertragung ist aus der EP 463 214 A1 bekannt. Das Modul weist einen Licht aussendenden Baustein und einen Licht empfangenden Baustein auf, einen Lichtwellenleiter und einen Strahlteiler. Den Bauelementen und dem Lichtwellenleiter sind jeweils eine Koppeloptik zugeordnet. Wenn Sende- und Empfangszweig mit der gleichen Wellenlänge arbeiten, kann mit dem Strahlteiler eine 50 prozentige oder andere Trennung zwischen den beiden Zweigen eingestellt werden. Bei einer 50 prozentigen Trennung zwischen den beiden Zweigen bedeutet dies, daß in jedem Zweig 50 % des Sende- bzw. Empfangslichtes nicht nutzbar ist.

Es ist Aufgabe der Erfindung eine optische Sende- und Empfangsanordnung anzugeben, die es erlaubt, von einem Licht aussendenden Bauelement aus ein optisches Signal in eine Vielzahl von Lichtwellenleitern einzukoppeln und andererseits das durch die Lichtwellenleiter empfangene Licht auf ein jeweils zugehöriges Licht empfangendes Bauelement zu richten.

Die Aufgabe wird durch eine optische Sende- und Empfangsanordnung mit den Merkmalen des Patentanspruches 1 gelöst. Vorteilhafte Weiterbildungen sind in den Unteransprüchen angegeben.

Die optische Sende- und Empfangsanordnung arbeitet nach dem Strahlteilerprinzip, wobei für jeden Lichtwellenleiter ein Strahlteiler vorgesehen ist und die Strahlteiler hintereinander geschaltet von einem Licht emittierenden Element gespeist werden. Eine solche Strahlteileranordnung ist beispielsweise aus der EP 158 967 A2 bekannt. Bei einer optischen Sende- und Empfangsanordnung ist darauf zu achten, daß das aus jeder einzelnen der Übertragungslichtwellenleiter kommende Empfangssignal auf ein zugehöriges Licht empfangenes Bauelement gerichtet wird, ohne daß die benachbarten Licht empfangenden Bauelemente, die zu den benachbarten Übertragungslichtwellenleitern gehören, mehr als zulässig gestört werden. Auch ist es bei optischen Sendeanordnungen wichtig, Rückreflexionen an spiegelnden Flächen in den Laser zu vermeiden. Dies kann beispielsweise dadurch erfolgen, daß der Reflex durch einen Schrägschliff der Stirnfläche des Lichtwellenleiters unterdrückt wird. Durch den Schrägschliff der Lichtwellenleiterfläche und das gleichzeitige Schrägstellen der Lichtwellenleiterachse bezüglich der optischen Achse wird die Einfügedämpfung gering und die Übersprechdämpfung hoch gehalten. Eine hohe Übersprechdämpfung bedeutet, daß die Reflexion von Licht aus dem Licht sendenden Bauelement am Lichtwellenleiter und die Einkopplung in das Licht empfangende Bauelement vermieden wird. Einen maximalen Einkoppelwirkungsgrad in den Lichtwellenleiter erreicht man, wenn der Schliffwinkel des schräg angeschliffenen Lichtwellenleiters $\beta$ und der Schielwinkel $\delta$, zwischen der optischen Achse und der longitudinalen Achse des Lichtwellenleiters in einer festen Beziehung zueinander stehen. Es gilt:

$$\delta = (\arcsin(\frac{n_1}{n_0} \cdot \sin \beta)) - \beta$$

wobei $n_0$ der Brechungsindex des Mediums zwischen Strahlteiler und Lichtwellenleiter und $n_1$ der Brechungsindex des Lichtwellenleiters sind. Zu dieser Formel kommt man unter Einsatz des Brechungsgesetzes von Snellius mit der Randbedingung, daß ein Lichtstrahl der auf der optischen Achse verläuft auf die longitudinale Achse des Lichtwellenleiters gebrochen werden soll. Es ist weiter von Vorteil, daß das Licht emittierende Element bezüglich dem Tragkörper vor der Fixierung justiert werden kann. Zur Justage ist eine Messanordnung vorgesehen. Auch die Licht empfangenden Elemente können bezüglich dem Tragkörper vor Fixierung justiert werden. Es ist von Vorteil optoelektrische Bauelemente einzusetzen, die bereits in einem hermetisch dichten Gehäuse gekapselt sind. Wenn man erreichen will, daß in alle Lichtwellenleiter ungefähr gleich viel Licht eingekoppelt wird, so kann dies durch eine leichte Zunahme im Reflexionsvermögen von Strahlteiler zu Strahlteiler erfolgen. Dabei hat der Strahlteiler das geringste Reflexionsvermögen, der dem Licht aussendenden Bauelement am nächsten ist. Da jede Transmission des Lichtes aus dem Licht aussendenden Bauelement durch einen Strahlteiler einen Versatz des Lichtstrahles bedingt, kann es erwünscht sein, die Strahlteiler abwechselnd um einen Winkel $+ \alpha$ und $- \alpha$ zu neigen. Benachbarte Strahlteiler sind dann um einen Winkel von $2 \alpha$ gegeneinander gedreht, und somit addieren sich die einzelnen Versätze nicht.

2

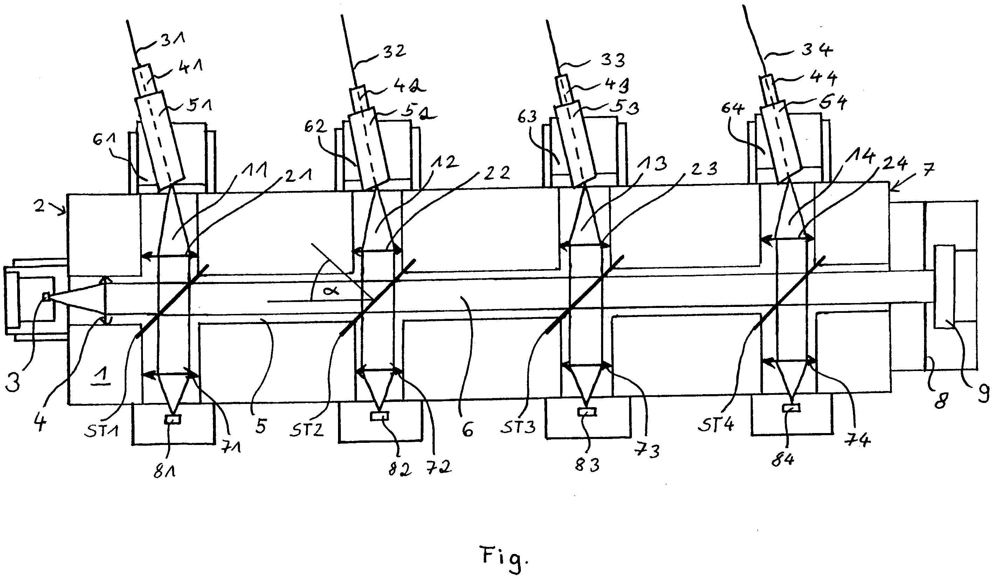

Ein Ausführungsbeispiel der Erfindung wird anhand der Zeichnung erläutert. Die Figur zeigt eine Aufsicht auf eine optische Sende- und Empfangsanordnung mit vier Lichtwellenleitern.

Die optische Sende- und Empfangsanordnung besteht aus einem Tragkörper 1, an dessen Stirnfläche 2 ein Licht aussendendes Bauelement, ein Laser 3, angeordnet ist. Der Laser 3 ist axial und lateral justierbar und in einem hermetisch abgedichteten Gehäuse angeordnet. Das Gehäuse wird nach der Justage vorzugsweise durch Laserschweißen am Tragkörper 1 fixiert. Der Tragkörper 1 ist mit einer langgestreckten Öffnung 5 versehen, an deren einem Ende der Laser 3 befestigt ist und an deren anderem Ende eine Meßanordnung vorgesehen ist. Der Laser wird so justiert, daß der austretende Lichtstrahl auf eine Kollimierungslinse 4 fällt, die in der langgestreckten Öffnung 5 nahe dem laserseitigen Ende befestigt ist. Mit der Kollimierungslinse 5 wird ein kollimierter Strahl 6 erzeugt, der an der anderen Stirnfläche 7 des Strahlkörpers 1 austritt und auf die Meßanordnung trifft. Die Meßanordnung besteht aus einer Blende 8 und einer Meßphotodiode 9. Im kollimierten Strahl 6 sind Strahlteiler ST1 bis ST4 vorgesehen. Die Flächennormale der Strahlteiler ST1 bis ST4 schließt jeweils mit der Richtung des Lichtstrahls 6 einen Winkel $\alpha$ ein. Im vorliegenden Fall ist $\alpha$ = 45°. Es sind aber auch andere Winkel beispielsweise 30° möglich. Nach dem Durchgang des Strahls 6 durch einen Strahlteiler wird der kollimierte Strahl 6 um einen kleinen Betrag parallel verschoben (diese parallele Verschiebung ist in der Figur nicht dargestellt). Die Verschiebung hängt vom Winkel $\alpha$, vom Brechungsindex und von der Dicke des Strahlteilers ab und beträgt typischerweise ungefähr 0,2 mm. Bei einer großen Anzahl von Strahlteilern muß der Versatz der sich, wenn die Strahlteiler alle in eine Richtung geneigt sind addiert, in der Lage der langgestreckten Öffnung berücksichtigt werden. Um diesen mit jedem Strahlteiler ansteigenden Versatz des Strahls 6 zu vermeiden, ist es möglich, die Strahlteiler abwechselnd um den Winkel + $\alpha$ und - $\alpha$ zu neigen. Dadurch findet der Versatz einmal in die eine und das andere Mal in die Richtung statt und hebt sich damit immer wieder auf. Die Strahlteiler ST1 bis ST4 sind auf der dem Laser 3 zugewandten Seite mit einer teilweise reflektierenden Schicht und auf der dem Laser 3 abgewandten Seite mit einer Antireflexionsschicht versehen. Die teilweise reflektierende Schicht hat erfindungsgemäß nur ein geringes Reflexionsvermögen von beispielsweise $R_1$ = 0,1. Am ersten Strahlteiler ST1 wird also der Anteil $I_0 \cdot R_1$ reflektiert, wobei $I_0$ die Strahlintensität hinter der Kollinierungslinse 4 ist. An den folgenden Strahlteilern werden jeweils die Anteile $I_0 \cdot (1-R_1) \cdot R_2$ für den Strahlteiler ST2 und $I_0 \cdot (1-R_1) \cdot (1-R_2) \cdot R_3$ für ST3 und so weiter reflektiert. Durch eine leichte Zunahme im Reflexionsvermögen von Strahlteiler zu Strahlteiler läßt sich erreichen, daß an allen Strahlteilern etwa gleich viel Licht reflektiert wird. Das Reflexionsvermögen $R_n$ des vom Laser aus n-ten Strahlteilers beträgt dann

$$R_n = \frac{R_1}{\displaystyle\prod_{i=1}^{n-1} (1-R_i)}$$

wobei $R_i$ das Reflexionsvermögen des i-ten Strahlteilers ist. Die reflektierten Strahlen 11 bis 14 werden über die Fokussierungslinsen 21 bis 24 auf Lichtwellenleiter 31 bis 34 fokussiert. Die Lichtwellenleiter sind in Steckern 41 bis 44 gehalten und in Steckbuchsen 51 bis 54 eingeführt. Zur Vermeidung von störenden Rückrefexionen enden die Stecker mit den Lichtleitfasern mit einer schrägen Stirnfläche. Die Buchsen 51 bis 54 sind in axial und lateral justierbaren Flanschen 61 bis 64 schräg eingefasst, wobei die schräge Einfassung die Brechung an der schrägen Lichtwellenleiterstirnflächen kompensiert.

Das aus den Lichtwellenleitern 31 bis 34 austretende Empfangslicht fällt nach Kollimierung durch die Linsen 21 bis 24 auf die Strahlteiler ST1 bis ST4. Da bei den Strahlteilern das Transmissionsvermögen groß gegenüber dem Reflexionsvermögen ist, fällt der größte Teil des Lichtes nach Fokussierung durch die Linsen 71 bis 74 auf Licht empfangende Bauelemente, Empfangsdioden 81 bis 84. Die Empfangsdioden können je nach Toleranzanforderungen und Größe der Licht empfindlichen Empfangsfläche entweder lateral justierbar oder fest eingebaut sein. Wichtig beim Empfangskonzept ist, daß bei allen Strahlteilern das Transmissionsvermögen wesentlich größer als das Reflexionsvermögen ist, damit nur ein sehr geringes Übersprechen von einem Empfangszweig auf den benachbarten Empfangszweig auftreten kann. Ein solches Übersprechen kann durch das an einem Strahlteiler reflektierte Licht hervorgerufen werden. Bei einem Reflexionsvermögen von $R_n$ wird der Anteil $R_n \cdot I_E$ ($I_E$ Intensität des empfangenen Lichts) in Richtung auf Laser 3 umgelenkt. Am benachbarten Strahlteiler wird hiervon der Anteil $R_{n-1} \cdot R_n \cdot I_E$ auf die benachbarte Empfangsdiode gelenkt. Falls $R_n$ = $R_{n-1}$ = 0,1 beträgt der auf die benachbarte Empfangsdiode gelenkte Teil nur 1 % von $I_E$, während der Nutzanteil des im Empfänger N empfangenen Lichts 90 % von $I_E$ beträgt.

Das Übersprechen von einem Kanal zum Nachbarkanal wäre in diesem Beispiel -19,5 db und damit ausreichend zur Trennung benachbarter Empfangskanäle.

**Patentansprüche**

1. Optische Sende- und Empfangsanordnung mit mehreren Lichtwellenleitern (31-34), in die jeweils Licht eingekoppelt wird und aus denen jeweils Licht von jeweils einem Licht empfangenden optoelektrischen Bauelement (81-84) empfangen wird, wobei jeweils zwischen dem Lichtwellenleiter (31-34) und dem Licht empfangenden Bauelement(81-84) ein Strahlteiler (ST1-ST4) angeordnet ist und der durch diesen transmittierte Anteil des Lichts aus dem Lichtwellenleiter (31-34) auf das Licht empfangende Bauelement (81-84) trifft, wobei ein gemeinsames Licht aussendendes optoelektrisches Bauelement (3) vorgesehen ist, das mit jedem Lichtwellenleiter (31-34) verbunden ist, indem der reflektierte Anteil, der an dem zu dem jeweiligen Lichtwellenleiter zugehörigen Strahlteiler (ST1-ST4) reflektiert wird, in die jeweiligen Lichtwellenleiter eingekoppelt wird und der transmittierte Anteil auf den nächsten Strahlteiler (ST1-ST4) trifft.

2. Optische Sende- und Empfangsanordnung nach Anspruch 1, dadurch gekennzeichnet, daß der transmittierte Anteil des vom Licht aussendenden Bauelement (3) gesehenen letzten Strahlteilers (ST4) auf eine Meßanordnung aus Blende (8) und Empfänger (9) trifft, die zur Justage des Licht aussendenden Bauelementes (3) dient.

3. Optische Sende- und Empfangsanordnung nach einem der Ansprüche 1 oder 2, dadurch gekennzeichnet, daß ein Tragkörper (1) mit einer langgestreckten Öffnung (5) vorgesehen ist, an deren einem Ende das Licht aussendende Bauelement angeordnet ist und in der die Strahlteiler befestigt sind.

4. Optische Sende- und Empfangsanordnung nach den Ansprüchen 2 und 3, dadurch gekennzeichnet, daß die Meßanordnung an dem dem Licht aussendenden Bauelement (3) gegenüberliegenden Ende der Öffnung (5) angeordnet ist.

5. Optische Sende- und Empfangsanordnung nach einem der Ansprüche 1 bis 4, dadurch gekennzeichnet, daß das Transmissionsvermögen der Strahlteiler um mindestens einen Faktor 5, vorzugsweise einen Faktor 9 größer als das Reflexionsvermögen der Strahlteiler ist.

6. Optische Sende- und Empfangsanordnung nach einem der Ansprüche 1 bis 5, dadurch gekennzeichnet, daß jeweils die den Strahlteilern zugewandten Stirnflächen der Lichtwellenleiter schräg abgeschliffen sind und daß jeweils die longitudinalen Achsen der Lichtwellenleiter zu den optischen Achsen der Systeme aus Strahlteiler und Bauelementen geneigt angeordnet sind.

7. Optische Sende- und Empfangsanordnung nach einem der Ansprüche 1 bis 6, dadurch gekennzeichnet, daß das Reflexionsvermögen der Strahlteiler mit der Entfernung zwischen Strahlteiler und Licht aussendenden Bauelement zunimmt.

8. Optische Sende- und Empfangsanordnung nach Anspruch 7, dadurch gekennzeichnet, daß das Reflexionsvermögen $R_n$ des vom Licht aussendenden Bauelementes aus n-ten Strahlteilers (STn)

$$R_n = \frac{R_1}{\prod\limits_{i=1}^{n-1} (1-R_i)}$$

beträgt.

9. Optische Sende- und Empfangsanordnung nach einem der Ansprüche 1 bis 8, dadurch gekennzeichnet, daß benachbarte Strahlteiler abwechselnd um den Winkel $+ \alpha$ bzw. $- \alpha$ gegen die optische Achse geneigt angeordnet sind.

Fig.